Europäisches Patentamt

(19) European Patent Office

Office européen des brevets

(11) Publication number : **0 469 849 A2**

(12) **EUROPEAN PATENT APPLICATION**

(21) Application number : **91306962.1**

(22) Date of filing : **30.07.91**

(30) Priority : **01.08.90 US 561083**

(43) Date of publication of application :
**05.02.92 Bulletin 92/06**

(84) Designated Contracting States :
**AT BE CH DE DK ES FR GB GR IT LI LU NL SE**

(51) Int. Cl.⁵ : **B30B 11/04, B29C 43/14**

(72) Inventor : **Chen, Liang-Erh**
**10-1, Alley 6 Lane 44 Kim Men Street**
**Taipei (TW)**

(74) Representative : **Loven, Keith James**
**Loven & Co Moulsham Mill Parkway**
**Chelmsford, Essex CM2 7PX (GB)**

(71) Applicant : **Chen, Liang-Erh**
**10-1, Alley 6 Lane 44 Kim Men Street**
**Taipei (TW)**

(54) **Moulding method.**

㉗ An automatic machine for manufacturing disposable kitchen utensils by using grains of all sorts as raw material. A molding die set and a plurality of maturing die sets are arranged in line at equal interval and respectively connected to a programmable control device. Mechanical hands are simultaneously carried by a link rod to remove a molded piece from the molding die set to the first maturing die set or from one maturing die set to a next maturing die set for further processing and immediately removed back to original position for next cycle of operation.

EP 0 469 849 A2

FIG·1

## BACKGROUND AND SUMMARY OF THE INVENTION:

The present invention is related to automatic machines and more particularly to an automatic manufacturing machine for manufacturing hygienic, disposable kitchen utensils.

Regular disposable kitchen utensils are generally made of high polymer material through foaming and molding process. Because foamed plastics are generally not resoluble under the weather, any used disposable kitchen utensils must be recollected to prevent from causing secondary pollution. However, it is difficult and costly to collect used disposable kitchen utensils for recovery.

The present invention is to design an automatic machine for automatically producing hygienic, disposable kitchen utensils by using grains of all sorts as raw material to eliminate any possible secondary pollution problem.

## BRIEF DESCRIPTION OF THE DRAWINGS:

The present invention will now be described by way of example with reference to the annexed drawings, in which:

Fig. 1 is a perspective view of a single die set according to the present invention; and

Fig. 2 is a schematic drawing illustrating the operation of the present invention.

## DETAILED DESCRIPTION OF THE PREFERRED EMBODIMENT:

Referring to the annexed drawings in greater detail, a disposable kitchen utensil manufacturing machine in accordance with the present invention is generally comprised of a molding die set 1, a plurality of maturing die sets 2 and a chucking device 3.

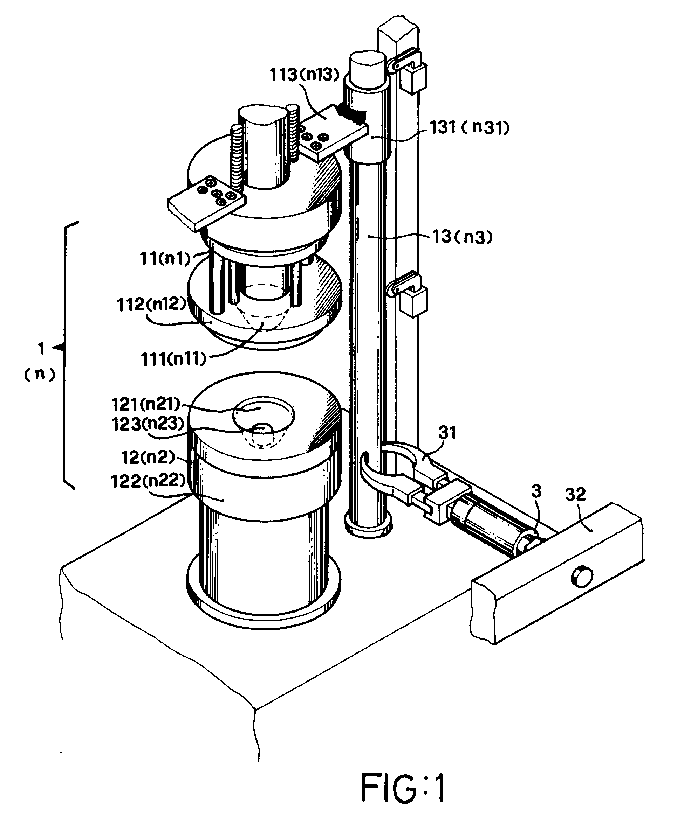

As illustrated in Fig. 1, a molding die set 1 comprises an upper die 11 having an upper die holder 112 with a male die portion 111 incorporated at the bottom and shaped according to the hollow space defined inside an utensil to be produced, a lower die 12 and a hydraulic sleeve lifter 13. The upper die holder 112 is made of steel or any suitable heat conducting material. The lower die 12 comprises a lower die holder 122 having a female die portion 121 at the top and shaped according to the outer configuration of an utensil to be produced. The lower die holder 122 and the female die portion 121 are also made of steel or any suitable heat conducting material. There is a pusher rod member 123 disposed at the center of the female die portion 121 and driven by a hydraulic cylinder to move up and down. The upper die holder 112 and the lower die holder 122 have each an electric heater fastened therein to keep at a constant temperature, for example at 150°C. The upper die 11 comprises two opposite connecting plates 113 at the top to respectively secure a sleeve 131 thereto, which sleeve 131 is carried by a hydraulic cylinder to move up and down on a hydraulic sleeve lifter 13. While moving of the sleeve 131 on a hydraulic sleeve lifter 13, the upper die 11 is simultaneous carried to move up and down. There is micro-switch set at one side of the molding die set 1, which will be automatically switched on or off while the sleeve 131 reaches its upper or lower limit during its moving stroke.

Maturing die sets (2-n) are of the structure same as the molding die set 1. For better understanding of the present invention, the last maturing die set n is taken as an example for description. The maturing die set n is comprised of an upper maturing die n1, a corresponding lower maturing die n2 and a hydraulic sleeve lifter n3. The upper maturing die n1 comprises an upper maturing die holder 112 with a maturing male die portion 111 incorporated at the bottom. The lower maturing die n2 comprises a lower maturing die holder n22 having a female maturing die portion 121 at the top. There is also a pusher rod member n23 disposed at the center of the female maturing die portion n21 and driven by a hydraulic cylinder to move up and down. The upper maturing die n1 is movably coupled with a hydraulic sleeve lifter n3 through which the upper maturing die n1 and the lower maturing die n2 are carried to close and open according to pre-determined setting

Referring to Fig. 1 again, a chucking device 3 is generally comprised of a plurality of mechanical hands 31 respectively secured to a link rod 32. The quantity of mechanical hands 31 is determined according to the total quantity of the molding die set 1 and the maturing die sets 2, i.e. equal to n+1. The mechanical hands 31 are driven to open and close according to pre-determined setting for removing shape-molded utensils. The link rod 32 is a programmable device controlled through a microprocessor to move according to a programmed cycle of forward, backward, leftward, forward, backward and rightward. After a first forward motion is completed each mechanical hand 31 is closed to retain a molded utensil. As soon as a second forward motion is completed, each mechanical hand 31 is opened to release a molded utensil. (This programmable automatic control operation is of the known art and not within the scope of the present invention).

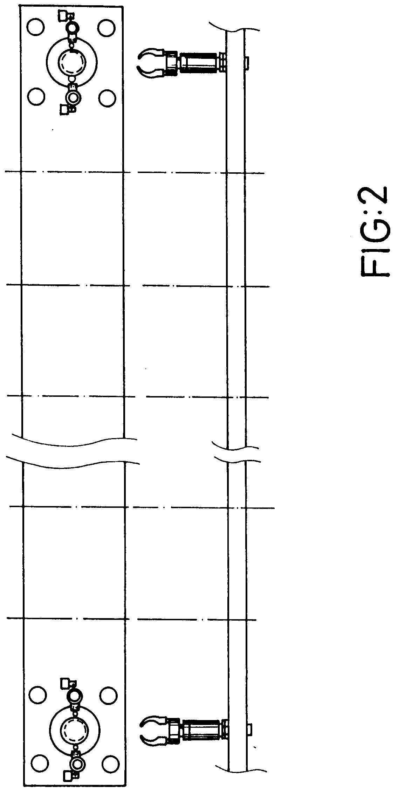

Referring to Fig. 2, after the upper die 11, lower die 12, male die portion 111 and female die portion 121 of the molding die set 1 as well as the maturing die sets (1-n) are arranged in a line at equal interval and simultaneously warmed up, pre-prepared raw material in pre-determined weight (rice, cereal or grains of all sorts mixed with suitable amount of water) is filled in the female die portion 121. After feeding of raw material, the upper die 11 and all maturing upper dies n1 are simultaneously carried to press down for a pre-determined period of time. After pressing on the lower die 12 or the maturing lower dies n2 for a pre-determined period of time, the upper die 11 and the maturing upper dies n1 are moved up to leave from the lower die 12 or the maturing lower dies n2, and the pusher rod member 123 and n23 are lifted to push the molded kitchen utensils upward from the lower die 12 or the maturing lower dies n2. At the same time, the link rod 32 is moved forward and the mechanical hands 31 are controlled to catch the molded kitchen utensils. Immediately after catching of molded kitchen utensils, the link rod 32 is moved bactward and leftward and then forward to carry the mechanical hands 31 to a next position. After having been moved to a next position, the mechanical hands 31 are released so that the caught kitchen utensils are respectively placed on the next maturing die sets for next maturing process. The link rod 32 is then returned to original position for next stroke cycle. Therefore, the molding die set 1 is constantly in blank after each stroke cycle is completed and raw material is re-filled in the female die portion 121 of the lower die 12 for processing. The stroke cycle is repeated again and again. Once a molded kitchen utensil is picked up from the last maturing die set n by the last mechanical hand n+1 and placed on a finishing table, a kitchen utensil is completely made and delivered to next job-site for finishing and packing.

As an alternate form of the present invention, molded utensils from the molding die set 1 may be immediately, or after one or more maturing process, delivered to a drying room for drying and final setting.

Therefore, kitchen utensils can be automatically manufactured according to the present invention. The present invention can also eliminate the formation of possible water bubbles or air bubbles so as to ensure strong structure of kitchen utensils.

It is apparent that various modifications could be made to the present invention without departing from the basic teachings thereof. Recognizing that various modifications been apparent the scope herein shall be deemed as defined in the claims set forth hereinafter

## Claims

1. An automatic machine for manufacturing hygienic, disposable kitchen utensils, comprising:

a molding die set comprising an upper die, a lower die and a hydraulic sleeve lifter, said upper die and said lower die having each an electric heater fastened therein, said upper die having an upper die holder with a male die portion incorporated at the bottom and shaped according to the hollow space defined inside a kitchen utensil to be produced, said lower die comprising a lower die holder having a female die portion at the top and shaped according to the outer configuration of an utensil to be produced, and a pusher rod member disposed at the center of said female die portion and driven by a hydraulic cylinder to move up and down, said upper die having two opposite connecting plates attached thereto at the top to respectively secure a sleeve, said sleeve being driven to move up and down on said hydraulic sleeve lifter, said hydraulic sleeve lifter having a micro-switch set at one side and been automatically switched on or off during moving stroke of said sleeve to its upper or lower limit;

a plurality of maturing die sets having each a structure same as said molding die set and being respectively spaced from one another and from said molding die set at equal interval;

a chucking device comprising a link rod having mechanical hands in quantity equal to the total quantity of said molding dies set and said maturing die sets and respectively spaced from one another at interval equal to the interval between said maturing die sets and said molding die set, said mechanical hands being program-controlled to move in proper sequence according to a programmed cycle of forward, backward, leftward, forward, backward and rightward, and to clamp up a molded kitchen utensil after completion of a first forward motion or release a molded kitchen utensil after completion of a secondary forward motion.

2. The automatic machine of claim 1, wherein the quantity of said maturing die sets is most preferably 14 sets.

3. The automatic machine of claim 1, wherein said hydraulic sleeve lifter can be a pneumatic sleeve lifter.

4. The automatic machine of claim 1, which comprises a molding die set and a drying device for drying kitchen utensils molded through said molding die.

5. A machine for moulding utensils from edible grain materials, comprising a plurality of heated two-part mould stages, means for introducing the grain material into a first mould stage, means for urging the two parts of the mould together for a pre-determined time to form a raw utensil, means for transferring the raw utensil to at least one successive stage, and means at said successive stage for maturing the raw utensil between said two parts of the mould to produce the final utensil.

113(n13)

131 (n31)

13(n3)

11(n1)

112(n12)

111(n11)

1
(n)

121(n21)
123(n23)
12(n2)
122(n22)

31

3    32

FIG:1

FIG:2